**Europäisches Patentamt**

**European Patent Office**

**Office européen des brevets**

(11) Publication number : **0 441 230 B1**

# EUROPEAN PATENT SPECIFICATION

(45) Date of publication of patent specification :
**13.07.94 Bulletin 94/28**

(51) Int. Cl.⁵ : **C02F 1/24, B03D 1/24**

(21) Application number : **91101161.7**

(22) Date of filing : **29.01.91**

(54) **Apparatus for separation by pressurization and flotation.**

(30) Priority : **09.02.90 JP 31188/90**
     **15.03.90 JP 65219/90**

(43) Date of publication of application :
     **14.08.91 Bulletin 91/33**

(45) Publication of the grant of the patent :
     **13.07.94 Bulletin 94/28**

(84) Designated Contracting States :
     **DE GB SE**

(56) References cited :
     **GB-A- 457 149**
     **US-A- 3 769 207**
     **US-A- 4 022 696**

(73) Proprietor : **Ozawa, Masakatsu**
     **188, Mizukami**
     **Fujieda-shi, Shizuoka-ken (JP)**

(72) Inventor : **Ozawa, Masakatsu**
     **188, Mizukami**
     **Fujieda-shi, Shizuoka-ken (JP)**

(74) Representative : **Körner, Ekkehard, Dipl.-Ing.**
     **Patentanwalt**
     **Maximilianstrasse 58**
     **D-80538 München (DE)**

## Description

The invention refers to an apparatus for separating solid particles from particles containing water by pressurization and flotation, as set forth in the preamble of claim 1.

An apparatus of this kind is known from US-A-4,022,696. In this document an apparatus is disclosed in which the feed means and the discharge means extend radially and revolve together in a vessel, creating equal setting times for the material to be treated. Turbulent-free feed is established and air is dissolved in the treated water, forming bubbles upon expansion. Waste water is fed by the revolving arm and by nozzles and is sprayed towards a dividing wall revolving as well. The dividing wall, together with a bottom baffle plate and further baffles form a revolving waste water feed trough open at the rear side, the object of which is to avoid turbulence. The discharge of impurities effected by a scoop, which not only revolves along with said trough and the revolving arm about the central axis of the vessel, but also rotates about its own longitudinal axis to cyclically collect and lift the impurities and guide them to central sludge compartments.

An apparatus for clarifying water is known from GB-A-457 149, having a central mixing chamber and a radially extending scraper. Foam is fed to the mixing chamber to float and be scraped off by the scraper. The apparatus has a radially extending discharge means so that different setting times of the material to be discharged by the scraper result therefrom.

The known apparatus have in common that the water to be processed and the pressurized water are supplied into the tank for separation and flotation of the particles at least partly in a zone distant from the surface of the water within the tank so that the separation of the solids from the water carried out by attaching microscopic bubbles to the particles to cause them to float upwards requires an unnecessarily long period of time until all the particles had come to the surface. Furthermore, some turbulence is thereby caused in the water, affecting the efficiency of the separation process.

It is the object of the present invention to provide a separation apparatus by which the processing capacity is improved.

This object is attained by the features of claim 1. Preferred embodiments of the invention are subject matter of the dependent claims.

In the present invention, the particle containing raw water and the pressurized water are introduced to the bottom of the mixing chamber and mixed therein, and because the mixing chamber is under atmospheric pressure, the mixed water gradually flows upward while producing air bubbles. The air bubbles attach themselves to the suspended particles in the mixed water and flow from the upper part of the mixing chamber onto the surface in the tank.

Because the particles attached to air bubbles decrease in the specific gravity, the particles float on the surface. The flotables are skimmed by the skimmer rake and absorbed by an absorption cup operated by a discharge pump.

Because the water to be treated is supplied onto the surface, there occurs no turbulence in the tank caused by the water supplied. Thus, the retention time for processing in the tank can be reduced, resulting in remarkable increase in the amount of water to be treated per unit cubic volume of the tank.

Further, the guide plate adjustable in its mounting angle can optionally change the angle by which the water is supplied to the surface, according to the property of the water. For example, the water may be supplied somewhat at a distance from the surface or at a position abutting on the surface.

By supplying the water onto the surface in the tank according to the present invention, no agitation is caused in the tank. This will improve the separation efficiency in the tank and permit the tank to have smaller surface area and water depth.

Brief Description of the Drawings

Fig. 1 is a vertical sectional view of the whole apparatus according to a first embodiment of the invention;
Fig. 2 is a top view thereof;
Figs. 3 to 6 show a second embodiment, Fig. 3 being a vertical sectional view of the whole apparatus according to a second embodiment of the invention;
Fig. 4 is a top view thereof;
Figs. 5A, 5B, 5C are sectional views showing a distribution pipe in detail;
Fig. 6 is a sectional view showing the mounting condition of a guide plate;
Fig. 7 is a top view of another means for removing flotables.

Embodiments

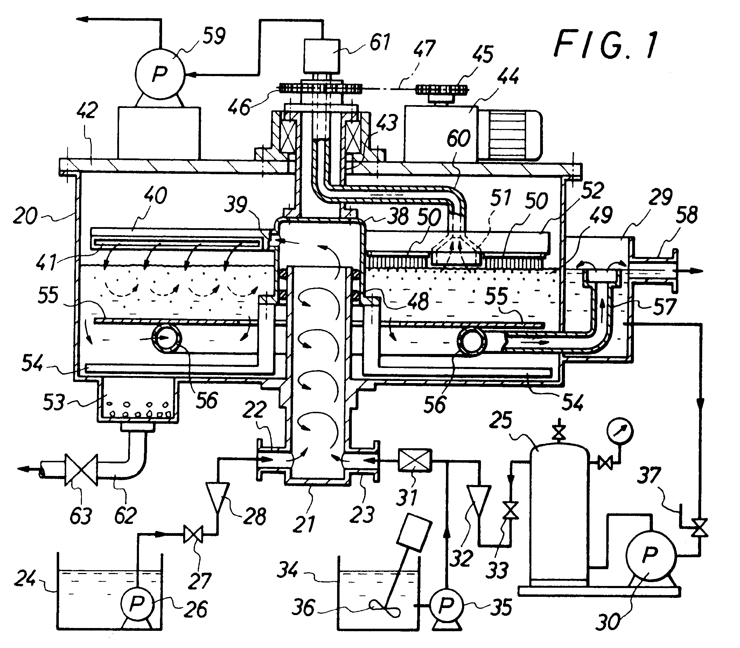

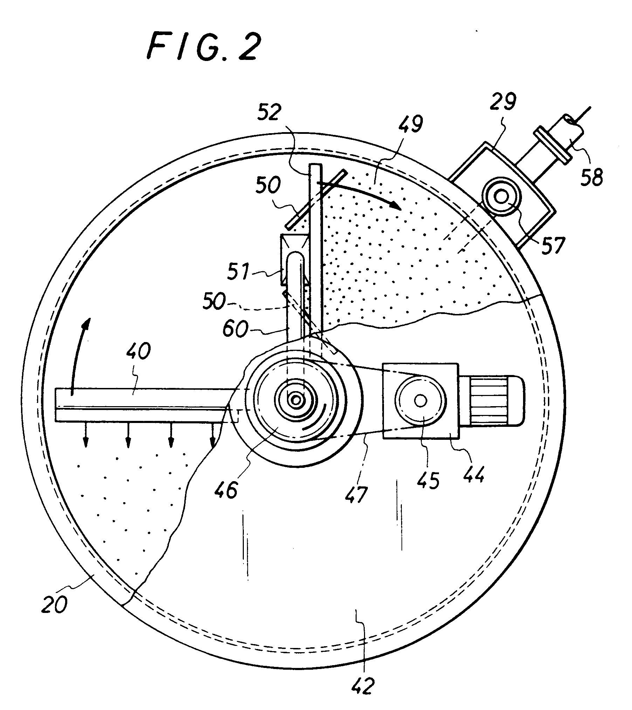

With reference to Figs. 1 and 2, a flotation tank 20 of cylindrical shape, at the central portion of which is positioned a cylindrical mixing chamber 21 having two inlets at the bottom; an inlet 22 for the particle containing raw water and another inlet 23 for pressurized water. The inlet 22 is connected to a tank 24 housing the raw water while the inlet 23 is connected to a pressurizing tank 25.

The tank 24 containing the raw water is connected to the inlet 22 via a pump 26, a flow adjusting valve 27, and a flow meter 28. Thus, the raw water stored in the tank 24 and the pressurized water in the tank 25 are supplied separately to the bottom of the mixing chamber 21.

Outside of the flotation tank 20, there is a processed water tank 29 from which the processed water is taken out to be pressurized with air by a pump 30 and stored in the tank 25. Between the inlet 23 and the tank 25, a pressure reducing valve 31, a flow meter 32 and a flow adjusting valve 33 are provided. Further, between the pressure reducing valve 31 and the flow meter 32, a tank 34 for chemical agents, such as flocculating agents, is connected via a supply pump 35. Reference numeral 36 indicates a stirring means. Reference numeral 37 is an air intake provided between the tank 29 and the pump 30.

An upside-down cup-shaped cylinder 38 is mounted rotatable at the upper end of the mixing chamber 21. The rotatable cylinder 38 has an outlet 39 to which a horizontal distribution pipe 40 is connected. The distribution pipe 40 is formed with a distribution slit 41 opening along the pipe 40. The water to be treated, namely the mixture of the raw water and the pressurized water, coming from the outlet 39 is distributed by the pipe 40 onto the surface of the water in the flotation tank 20.

A rotatable shaft 43 projecting vertically through a frame 42 covering the upper part of the flotation tank 20 is mounted to the cylinder 38. A rotating device 44 mounted on the frame 42 has a driving gear 45 associated by a chain 47 with a driven gear 46 mounted at the upper part of the drive shaft 43. Between the mixing chamber 21 and the rotatable cylinder 38, there is provided a sealing means 48.

Inside the tank 20, there are skimmer rakes 50, and an absorption cup 51. Flotables 49 on the surface of the water in flotation tank 20 are skimmed off by the skimmer rakes 50 and absorbed by the absorption cup 51. The skimmer rakes 50 are mounted to a mounting bar 52 fixed at the cylinder 38, and are inclined to the absorption cup 51 so that the flotables gather at the cup 51.

On the other hand, rakes 54 for sediments are provided at the bottom of the tank 20 to rake sediments on the bottom toward an outlet 53. The rakes 54 are disposed radially of the mixing chamber 21 and connected to the cylinder 38 to be rotated thereby.

Partition plates 55 are mounted near the bottom of the flotation tank 20, and under the plates, there is a water catcher pipe 56 connected to a gauge pipe 57 standing up in the tank 29 and having an opening therein. By this arrangement, the water level in the flotation tank 20 is determined by the upstanding dimension of the gauge pipe 57. The processed water tank 29 is formed with a discharge pipe 58. A pump 59 for discharging the flotables is mounted to the frame 41 and connected to the absorpotion cup 51 via an absorption pipe 60 and a universal joint 61. The outlet 53 for the sediments is connected with a discharge pipe 62, which is adapted to open/close by a valve 63 and is usually closed.

As shown in Fig. 2, the distribution pipe 40 is mounted in the radial direction of the flotation tank 20 and adapted to rotate clockwise by the rotating device 44. The distribution pipe 40 is followed in the rotational direction by the skimmer rakes 50 and the absorption cup 51. The skimmer rakes 50 are slanted forward in the rotational direction so that they scrape up the flotables 49 toward the absorption cup 51.

In the separation apparatus explained above, the processed water in the tank 29 is pressurized by a pump 30 with air whose weight ratio to the particles in the raw water is 1/10 to 1/50, to a pressure of 2 to 4 kg/cm², for example, and then the water is supplied to the tank 25. Consequently, a large amount of air is dissolved in the water in the tank 25.

According to the embodiment, the air is introduced to the intake side of the pump 30 and pressurized together with the water, so as to eliminate air compressing means. However, it is also possible to pressurize the water and air separately and supply them to the tank 25.

The flow of the pressurized water from tank 25 is controlled by the flow adjusting valve 33, and supplied through the pressure reducing valve 31 and the inlet 23 to the bottom of the mixing chamber 21, together with the chemical agent fed from the tank 34 via the pump 35. The flow of the raw water from tank 24 is controlled by the pump 26 and the flow adjusting valve 27, and fed through the inlet 22 to the bottom of the mixing chamber 21, where the raw water is mixed with the pressurized water and gradually rises.

Since the mixing chamber is at atmospheric pressure, the air dissolved in the high-pressure water supplied from the inlet 23 emerges as microscopic air bubbles and the bubbles attach to the particles contained in the water.

The mixed water to be treated reaches the upper end of the mixing chamber 21 and flows out from the outlet 39 of the cylinder 38, together with air bubbles attaching to the particles. Then the water is supplied from the slit 41 formed in the clock-wise rotating distribution pipe 40 and uniformly distributed onto the water surface in the tank 20.

By attachment to the air bubbles, the particles in the water decrease in its specific gravity whereby the particles separate from the water and float on the surface. The skimmer rakes 50 rotating with the distribution pipe 40 skim off the flotables 49 and carry them to the absorption cup 51 to be absorbed and discharged thereby.

On the other hand, sediments having larger specific gravity than water sink to the bottom of the tank 20, where they are raked by the rakes 54 for sediments and carried to the outlet 53. Consequently, only the processed water free of flotables and sediments flows through the catcher pipe 56 and the gauge pipe 57 into the tank 29. As afore-mentioned, the processed water in the tank 29 is partly pressurized by the pump 30 and re-cycled to the flotation tank together with the air while the remaining processed water is discharged from the discharge pipe 58.

In this embodiment, the mixing chamber 21 in which air bubbles attach to the solid particles in the water to be treated is substantially separated from the flotation tank 20 and the water from the mixing chamber 21 is supplied from above the surface of the water in the flotation tank 20. Therefore, as the water to be treated is supplied, there occurs no such agitation of the water as seen in the prior art but only sinking phenomenon with the air bubbles sinking to an extremely small extent. Thus, the flotation tank 20 may be of a water depth necessary for such sinking, and furthermore, the tank may have minimum required area because the water is free of turbulence.

As an example, the processed water under pressure is re-cycled at the rate of 2m³ per hour to the flotation tank having 1m² surface area while the raw water is supplied to the mixing chamber at the rate of 5m³ per hour. In this case, the air bubbles sink to 30cm depth at the maximum. So, even in consideration of double safety factor, the effective water depth for the flotation tank can be 60cm at the maximum.

The required water depth of 0.6m is calculated by the following formula:

$$0.6(m) = \frac{\text{required retention time(H) x 7m}^3\text{/hour}}{\text{surface area 1m}^2\text{/hour}}$$

From the above formula, the required retention timefor processing is calculated by the following formula:

$$\text{Required retention time (hour)} = \frac{0.6}{7} = 0.09 \fallingdotseq 5$$

min.

In other words, it is possible to process the water of 7m³ per hour in the flotation tank having a surface area of 1m², an effective water depth of 0.6m, and a retention time of 5 minutes. As compared to the prior art tank having the same processing capacity, the flotation tank of the present invention can have 1/4 to 1/5 of the water depth required in the prior art, thereby substantially miniaturizing the flotation tank.

In the embodiment, the skimmer rakes 50 and the absorption cup 51 are disposed about 270° backward of the distribution pipe 40, but this angle may be enlarged up to, for example, 315° or 340° to extend the time lag between the distribution of the water and the removal of the flotables, for the purpose of increase in the processing capacity.

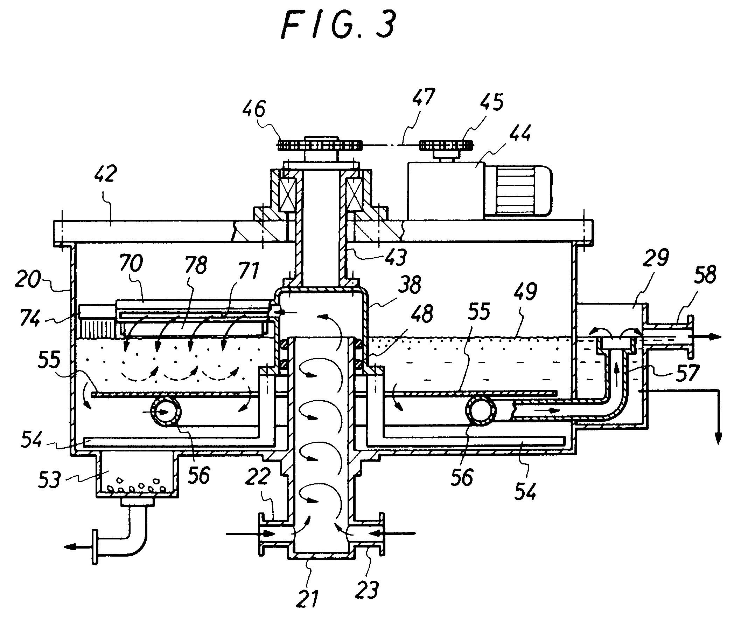

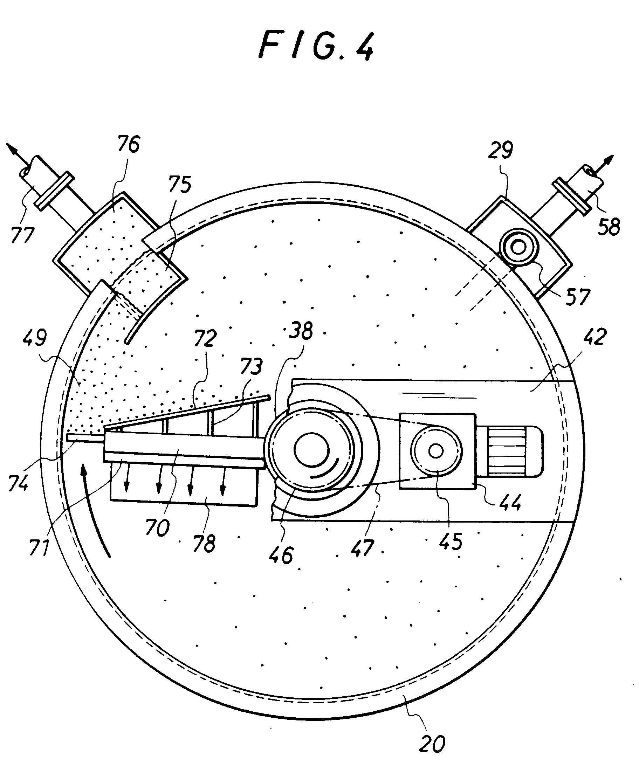

The second embodiment shown in Figs. 3 to 6 includes the distribution pipe for distributing the water to be treated onto the water surface in the flotation tank. Because major parts constituting this embodiment are same with that of the first embodiment, they are indicated by the same reference numerals and omitted from detailed description.

In the second embodiment, a distribution pipe 70 projects radially of the cylinder 38 and is formed with a distribution slit 71 opening along the pipe 70, through which the water to be treated coming from the mixing, chamber 21 is distributed from above onto the surface of the water in the flotation tank 20.

At the rear of the distribution slit 71, the pipe 70 carries via legs a skimmer rake 72, for skimming off the flotables 49 on the surface. The skimmer rake 72 is inclined to the distribution pipe 70, and as the pipe 70 rotates in the tank 20, the skimmer rake 72 pushes the flotables toward the circumferential wall of the tank 20.

The distribution pipe 70 is formed at its tip with a discharge rake 74, which points to the cirumferential wall and is adapted to discharge the flotables 49 gathering at the circumferential wall to an outlet 75. At a position corresponding to the outlet 75, the flotation tank 20 has an opening 76 for discharging the flotables, which opening is connected with a discharge pipe 77.

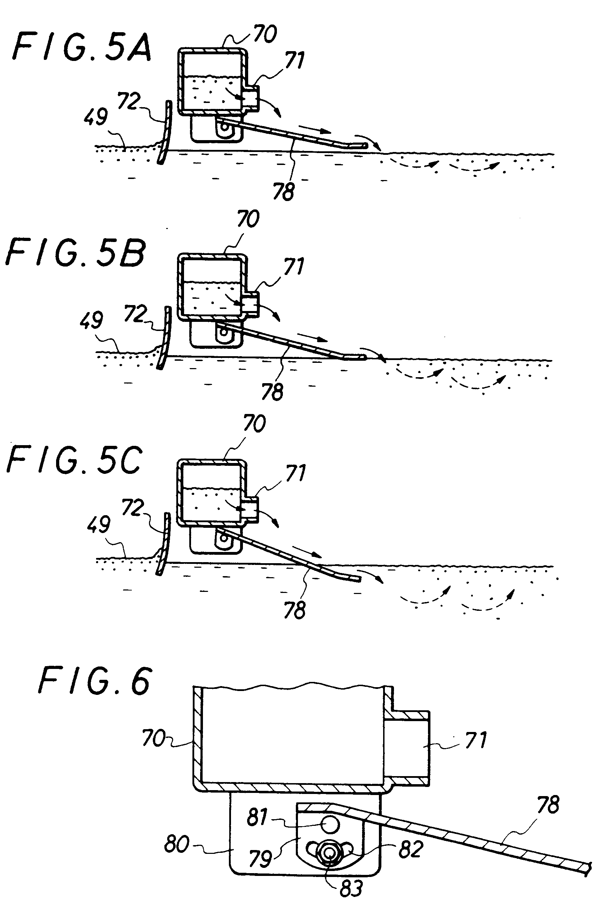

Figs. 5 to 6 show in detail a guide plate 78 mounted to the distribution pipe 70. In these drawings, the guide plate 78 is provided near the the distribution slit 71 of the pipe 70 so that its mounting angle can be adjusted. The guide plate 78 is formed at opposite ends with mounting plates 79 each pivotally mounted by a pin 81 to a bracket 80 formed at opposite lower ends of the pipe 70. The mounting plate 79 has a longitudinal opening 82 therein, through which a bolt 83 is screwed to fix the guide plate 78 to the bracket 80. Thus, the guide plate 78 is adjusted in the angle by the fixing position in the opening 82.

According to the property of the water to be treated, the guide plate 78 can have an optional angle of inclination among three positions for supply of the water; a first position in which the tip of the guide plate is somewhat apart from the surface of the water (Fig. 5A), a second position in which the tip abuts on the surface (Fig. 5B), and a third position in which the tip is in the water but very close to the surface thereof (Fig. 5C).

In the above embodiment, the skimmer rake gathers the flotables and carries them toward the circumferential wall of the tank, and the gathering flotables are taken out from the discharge opening formed outside of the tank.

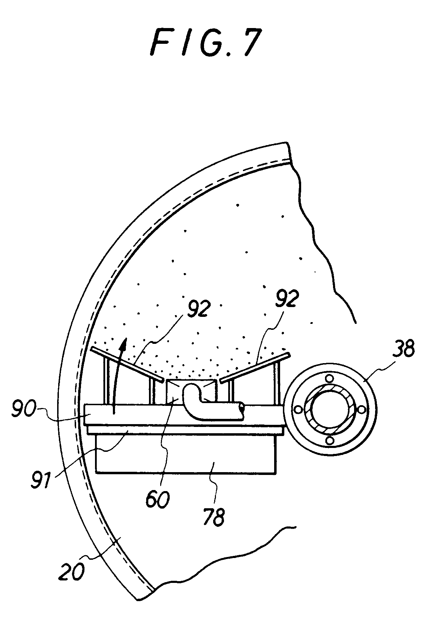

In Fig. 7, another embodiment of the discharge means for flotables is illustrated.

Fig. 7 shows a device for absorbing and discharging flotables by a pump, comprising a distribution pipe 90 having a distribution slit 91, and skimmer rakes 92 inclined to skim the flotables toward an absorption cup 60. The absorption cup 60 is connected to a pump, as in the case of the first embodiment, so as to absorb and discharge the flotables. So, it will be understood that outlet and discharge means for flotables disposed at the wall of the flotation tank are unnecessary in this embodiment.

Each of the above-described embodiments comprises the distribution pipe 40, 70 or 90, respectively projecting in one direction from the mixing chamber 21. If the flotation tank 20 is of large capacity so that the solids in the water to be treated completely separate and flotate when the distribution pipe rotates by 180°, another distribution pipe may be mounted at an angle of 180° from the existing pipe. In this case, the processing capacity will increase more.

**Claims**

1. Apparatus for separating solid particles from particle containing water by pressurization and flotation, comprising:
   a cylindrical flotation tank (20) for receiving the particle containing water, the surface of said water defining a predetermined level within said flotation tank (20),
   means (21, 23, 37) for introducing air into the particle containing water by means of pressurization of water before feeding the particle containing water into the flotation tank (20),
   supply means (40; 70) disposed in said flotation tank (20) and extending radially with respect to the axis of said flotation tank (20) and having outlet means (41; 71) disposed in a level higher than said predetermined level,
   removal means (50, 51; 92, 60) disposed in the region of said predetermined level and extending radially with respect to the axis of the flotation tank (20), so as to collect flotables (49) from the surface of said said water,
   said supply means (40; 70) and said removal means (50, 51; 92, 60) being concurrently rotatably mounted about the axis of said flotation tank (20),
   catcher means (56) at the bottom of said flotation tank (20) for catching the processed water; and means (57) for maintaining the water level in said flotation tank (20) at said predetermined level,
   **characterized in that**
   said means (21, 23, 27) for introducing air into the particle containing water comprises a mixing chamber (21) disposed in the center of said flotation tank (20) and provided with inlet means (22, 23) at its bottom portion for introducing particle containing raw water and pressurized water to be mixed with each other into said mixing chamber (21), and means (37, 30, 25) adapted to supply one (23) of said inlet means (22, 23) of said mixing chamber (21) with pressurized water having air dissolved therein,
   said supply and outlet means are formed by a distribution pipe (70) having a distribution slit (71) formed longitudinally along said distribution pipe (70) and a guide plate (78) adjustably mounted below said slit (71) so as to vary the mounting angle of said plate (78), and
said removal means (50, 51; 92, 60) are formed by skimmer rake means (50; 92) to skim off flotables (49) on the surface of the water in the tank (20) and an absorption cup (51; 60) mounted close to said skimmer rake means (50; 92) for absorbing the flotables (49) collected by said skimmer rake means (50; 92).

2. An apparatus as set forth in claim 1, wherein said removal means comprise a skimmer rake (72) mounted to the radially extending supply means (70) opposite to the outlet means (71) in an inclined manner to carry flotables (49) collected thereby towards the circumferrential wall of said flotation tank (20), and a discharge rake (74) mounted to the tip of the radially extending supply means (70), and an outlet (75) provided in the flotation tank (20) to discharge the flotables (49) collected and guided by said rakes (72, 74).

3. An apparatus as set forth in claim 1 or 2, wherein said mixing chamber (21) has an upside-down cup-shaped cylinder (38) rotatably mounted to its upper end, said cup-shaped cylinder (38) mounting said radially extending supply and removal means (40, 70; 50, 51, 92, 60) and having outlet means (37) connected to said radially extending supply means (40, 70).

4. An apparatus as set forth in claim 1 wherein said skimmer rake means (50, 92) are inclined to said absorption cup (51, 60).

5. An apparatus as set forth in claim 1 or 4 or in claim 3 when dependent on claim 1, wherein said supply means (40, 70) and said removal means (50, 51; 92, 60) are substantially extending in the same radial direction by mounting the removal means at the supply means on the side thereof opposite its outlet means (41, 71).

6. An apparatus as set forth in any one of claims 1, 2, 4 or in claim 3 when dependent on claim 1, wherein the removal means (50, 51) are mounted at an angle of more than 270° back of said supply means (40, 70).

**Patentansprüche**

1. Vorrichtung zur Abtrennung von Feststoffpartikeln aus partikelhaltigem Wasser durch Druckbeaufschlagung und Flotation, enthaltend:
   einen zylindrischen Flotationstank (20) zur Aufnahme des partikelhaltigen Wassers, wobei die Wasseroberfläche einen vorbestimmten Pegel innerhalb des Flotationstanks (20) bestimmt,

eine Einrichtung (21,23,37) zur Einleitung von Luft in das partikelhaltige Wasser durch Druckbeaufschlagung des Wassers vor dem Einleiten des partikelhaltigen Wassers in den Flotationstank (20),

eine Zuführeinrichtung (40;70), die in dem Flotionstank (20) angeordnet ist und sich radial bezüglich der Achse des Flotationstanks (20) erstreckt und eine Auslaßeinrichtung (41;71) aufweist, die höher als der vorbestimmte Pegel angeordnet ist,

eine Aufnahmeeinrichtung (50,51;92,60), die im Bereich des vorbestimmten Pegels angeordnet ist und sich radial bezüglich der Achse des Flotationstanks (20) erstreckt, um aufschwimmende Bestandteile (49) von der Wasseroberfläche aufzusammeln,

wobei die Zuführeinrichtung (40;70) und die Aufnahmeeinrichtung (50,51,92,60) gemeinsam um die Achse des Flotationstanks (20) drehbar montiert sind,

eine Auffangeinrichtung (56) am Boden des Flotationstanks (20) zum Aufnehmen des verarbeiteten Wassers; und

eine Einrichtung (57) zum Aufrechterhalten des Wasserspiegels im Flotationstank (20) auf dem vorbestimmten Pegel,

**dadurch gekennzeichnet,** daß die Einrichtung (21,23,27) zum Einleiten von Luft in das partikelhaltige Wasser eine Mischkammer (21), die in der Mitte des Flotationstanks (20) angeordnet und mit Einlaßeinrichtungen (22,23) in ihrem unterem Abschnitt zum Einleiten von partikelhaltigem Rohwasser und druckbeaufschlagtem Wasser in die Mischkammer (21) zur gegenseitigen Durchmischung versehen ist, und eine Einrichtung (37,30,25) enthält, die dazu eingerichtet ist, eine (23) der Einlaßeinrichtungen (22,23) der Mischkammer (21) mit druckbeaufschlagtem Wasser, in dem Luft gelöst ist, zu versorgen,

wobei die Zuführ- und Auslaßeinrichtungen von einem Verteilerrohr (70), das einen Verteilerschlitz (71) aufweist, der in Längsrichtung des Verteilerrohrs (70) ausgebildet ist, und einer Führungsplatte (78) gebildet sind, die einstellbar unter dem Schlitz (71) derart befestigt ist, daß der Montagewinkel der Platte (78) verändert werden kann, und

die Aufnahmeeinrichtung (50,51:92,60) von einem Abschöpfschild (50;52) gebildet ist, um aufschwimmende Bestandteile (49) von der Oberfläche des Wassers im Tank abzuschöpfen, sowie von einer Absaugglocke (51;60), die nahe dem Abschöpfschild (50;92) angeordnet ist, um die von dem Abschöpfschild (50;92) gesammelten aufschwimmenden Bestandteile (49) abzusaugen.

2. Vorrichtung nach Anspruch 1, bei der die Aufnahmeeinrichtung aufweist: einen Abschöpfschild (72), der an der sich radial erstreckenden Zuführungseinrichtung (70) gegenüber der Auslaßeinrichtung (71) geneigt derart befestigt ist, daß aufschwimmende, davon gesammelte Bestandteile (49) gegen die Umfangswand des Flotationstanks (20) geführt werden, und von einem Abgabeschild (74), der am freien Ende der sich radial erstreckenden Zuführeinrichtung (70) befestingt ist, und einen Auslaß (75), der im Flotationstank (20) angeordenet ist, um die von den Schild (72,74) gesammelten und geführten aufschwimmenden Bestandteile (49) auszulassen.

3. Vorrichtung nach Anspruch 1 oder 2, bei der die Mischkammer (21) einen umgekehrten, topfförmigen Zylinder (38) aufweist, der an ihrem oberen Ende drehbar befestigt ist and die sich radial erstreckenden Züführ- und Aufnahmeeinrichtungen (40,70;50,51,92,60) trägt und eine Auslaßeinrichtung (37) hat, die mit der sich radial erstreckenden Zuführeinrichtung (40,70) verbunden ist.

4. Vorrichtung nach Anspruch 1, bei der die Abschöpfschild (50,92) gegenüber der Absaugglocke (51,60) geneigt sind.

5. Vorrichtung nach Anspruch 1 oder 4 aoder nach Anspruch 3, wenn rückbezogen auf Anspruch 1, bei der die Zuführeinrichtung (40,70) und die Aufnahmeeinrichtung (50,51;92,60) sich im wesentlichen in derselben radialen Richtung erstrecken, indem die Aufnahmeinrichtung an der Zuführeinrichtung auf der der Auslaßeinrichtung entgegengesetzten Seite befestigt ist.

6. Vorrichtung nach einem der Ansprüche 1, 2, 4 oder nach Anspruch 3, wenn abhängig von Anspruch 1, bei der die Aufnahmeeinrichtung (50,51) unter einem Winkel von mehr als 270° hinter der Zuführeinrichtung (40,70) befestigt ist.

## Revendications

1. Appareil pour séparer, par pressurisation et flotation, des particules solides d'une eau contenant des particules, comprenant

une cuve cylindrique de flotation (20) pour recevoir l'eau contenant les particules, la surface de cette eau définissant un niveau prédéterminé à l'intérieur de la cuve de flotation (20),

des moyens (21, 23, 37) pour introduire de l'air dans l'eau contenant les particules en ayant recours à la pressurisation de l'eau avant d'amener l'eau contenant les particules dans la cuve de flotation (20),

des moyens d'alimentation (40; 70) situés dans la cuve de flotation (20) et s'étendant radialement par rapport à l'axe de celle-ci (20), et pourvus de moyens d'écoulement (41; 71) disposés à un niveau plus haut que le niveau prédéterminé,

des moyens d'évacuation (50, 51; 92, 60) situés dans la région du niveau prédéterminé et s'étendant radialement par rapport à l'axe de la cuve de flotation (20), de manière à recueillir les particules flottantes (49) à la surface de l'eau,

les moyens d'alimentation (40; 70) et les moyens d'évacuation (50, 51; 92, 60) étant montés de manière rotative pour tourner concurremment autour de l'axe de la cuve de flotation (20),

des moyens de captage (56) au fond de la cuve de flotation (20) pour recueillir l'eau traitée; et

des moyens (57) pour maintenir le niveau de l'eau dans la cuve de flotation (20) au niveau prédéterminé,

**caractérisé en ce que**

les moyens (21, 23, 27) pour introduire de l'air dans l'eau contenant les particules comprennent une chambre de mélange (21) située au centre de la cuve de flotation (20) et pourvue, en son fond, de moyens d'entrée (22, 23) pour l'introduction dans la chambre de mélange (21) de l'eau non traitée contenant les particules et de l'eau pressurisée qui doivent être mélangées, et des moyens (37, 30, 25) adaptés pour alimenter l'un (23) des moyens d'entrée (22, 23) de la chambre de mélange (21) en eau pressurisée dans laquelle de l'air est dissous,

les moyens d'alimentation et d'écoulement sont constitués d'un tuyau de distribution (70) pourvu d'une fente de distribution (71), formée de manière longitudinale le long du tuyau de distribution (70), et d'une plaque de guidage (78) montée de manière réglable au dessous de la fente (71) de manière à faire varier l'angle de montage de la plaque (78), et

les moyens d'évacuation (50, 51; 92, 60) sont constitués par des moyens comprenant des lames d'écumage (50; 92) pour écumer les particules flottantes (49) de la surface de l'eau se trouvant dans la cuve (20), et par une cloche d'absorption (51; 60) montée près des moyens comprenant les lames d'écumage (50; 92) pour absorber les particules flottantes (49) recueillies par ces dernières (50; 92).

2. Appareil selon la revendication 1, dans lequel les moyens d'évacuation comprennent une lame d'écumage (72) montée, du côté opposé aux moyens d'écoulement (71), sur les moyens d'alimentation (70) s'étendant radialement, de manière inclinée afin de transporter les particules flottantes (49) qu'elle rassemble en direction de la paroi circonférentielle de la cuve de flotation (20), par une lame d'évacuation (74) montée à l'extrémité des moyens d'alimentation (70) s'étendant radialement, et par un orifice de sortie (75) prévu dans la cuve de flotation (20) pour évacuer les particules flottantes (49) rassemblées et guidées par les lames (72, 74).

3. Appareil selon la revendication 1 ou 2, dans lequel la chambre de mélange (21) est pourvue d'un cylindre (38) en forme de cuvette renversée monté de manière rotative à son extrémité supérieure, le cylindre (38) en forme de cuvette renversée portant les moyens d'alimentation et d'évacuation (40, 70; 50, 51, 92, 60) s'étendant radialement et étant pourvu de moyens de sortie (39) communiquant avec les moyens d'alimentation (40, 70) s'étendant radialement .

4. Appareil selon la revendication 1, dans lequel les moyens (50, 92) comprenant les lames d'écumage sont inclinés par rapport à la cloche d'absorption (51, 60).

5. Appareil selon les revendications 1 ou 4 ou la revendication 3 lorsqu'elle dépend de la revendication 1, dans lequel les moyens d'alimentation (40, 70) et les moyens d'évacuation (50, 51; 92, 60) s'étendent sensiblement dans la même direction radiale du fait que les moyens d'évacuation sont montés sur les moyens d'alimentation, sur le côté de ceux-ci qui est opposé aux moyens de sortie (41, 71).

6. Appareil selon l'une quelconque des revendications 1, 2, 4 ou la revendication 3 lorsqu'elle dépend de la revendication 1, dans lequel les moyens d'évacuation (50, 51) sont montés suivant un angle de plus de 270 en arrière des moyens d'alimentation (40, 70).

FIG. 1

# FIG.2

FIG. 3

# FIG.4

FIG.5A

70
71
72
49
78

FIG.5B

70
71
72
49
78

FIG.5C

70
71
72
49
78

FIG.6

70
71
81
78
80
79
82
83

# FIG.7